# EUROPEAN PATENT APPLICATION

(11) **EP 4 531 248 A1**
(43) Date of publication of application: **02.04.2025**
(21) Application number: 24203167.2
(22) Date of filing: 27.09.2024
(51) Int. Cl.: H02K 5/20, H02K 7/00, H02K 7/116, H02K 9/19

(54) **END TURN COOLING ASSEMBLY**

(30) Priority: 27.09.2023 US 202318373663
(71) Applicant: American Axle & Manufacturing, Inc., Detroit, MI 48211 (US)
(72) Inventor: Waineo, Bryan N., Northville, 48168 (US); Jezowski, Tyler D., Farmington Hills, 48336 (US); Lau, Chi-Wai David, LaSalle, N9J 3H4 (CA); Derr, James R., Livonia, 48150 (US); Valente, Paul J., Berkley, 48072 (US)
(74) Representative: Bird & Bird LLP - Hamburg

(57) **Abstract**

A cooling assembly for an electric drive system in a battery electric vehicle includes a gearbox fluid manifold assembly, configured to couple to a radial face of a stator of a rotating electrical machine; an end cap fluid manifold assembly, configured to couple to a radial face of a stator of a rotating electrical machine; or both the gearbox fluid manifold assembly and the end cap fluid manifold assembly.

## Description

### TECHNICAL FIELD

The present application relates to battery electric vehicles (BEVs) and, more particularly, to rotating electrical machines included in BEVs.

### BACKGROUND

Vehicles increasingly rely on some form of electric propulsion. The vehicles can be described as battery-electric vehicles (BEVs), which include vehicles that partially rely on an electric motor for propulsion, such as hybrid-electric vehicles, as well as vehicles that solely rely on batteries and electric motors for propulsion. Given the inherent mobility of the BEVs, the electric motors included with them can face a wide range of conditions. And during operation, the electric motors can generate significant amounts of heat. It would be helpful to increase cooling efficiency of the BEVs in the vehicular environment.

### SUMMARY

A cooling assembly for an electric drive system in a battery electric vehicle includes a gearbox fluid manifold assembly, configured to couple to a radial face of a stator of a rotating electrical machine; an end cap fluid manifold assembly, configured to couple to a radial face of a stator of a rotating electrical machine; or both the gearbox fluid manifold assembly and the end cap fluid manifold assembly.

### BRIEF DESCRIPTION OF THE DRAWINGS

Figure 1 is a perspective view depicting an implementation of an electric drive unit;
Figure 2 is a cross-sectional view depicting an implementation of an electric drive unit;
Figure 3 is a perspective view depicting a portion of an implementation of a cooling assembly included in an electric drive unit;
Figure 4 is another perspective view depicting a portion of an implementation of a cooling assembly included in an electric drive unit;
Figure 5 is another perspective view depicting a portion of an implementation of a cooling assembly included in an electric drive unit;
Figure 6 is a perspective view depicting a portion of an implementation of a cooling assembly included in an electric drive unit.
Figure 7 is another perspective view depicting a portion of an implementation of a cooling assembly included in an electric drive unit;
Figure 8 is a cross-sectional view depicting a portion of an implementation of a cooling assembly included in an electric drive unit;
Figure 9 is another perspective cross-sectional view depicting a portion of an implementation of a cooling assembly included in an electric drive unit;
Figure 10 is a plan view depicting a portion of an implementation of a cooling assembly included in an electric drive unit;
Figure 11 is another plan view depicting a portion of an implementation of a cooling assembly included in an electric drive unit;
Figure 12 is a cross-sectional view depicting a portion of an implementation of an electric drive unit;
Figure 13 is another cross-sectional view depicting a portion of an implementation of an electric drive unit;
Figure 14 is another cross-sectional view depicting a portion of an implementation of an electric drive unit;
Figure 15 is an exploded view depicting a portion of an implementation of a cooling assembly included in an electric drive unit.
Figure 16 is a perspective cross-sectional view depicting a portion of an implementation of a cooling assembly included in an electric drive unit;
Figure 17 is a perspective view depicting a portion of an implementation of a cooling assembly included in an electric drive unit;
Figure 18 is a plan view depicting a portion of an implementation of a cooling assembly included in an electric drive unit;
Figure 19 is a perspective view depicting a portion of an implementation of a gearbox fluid manifold assembly included in a cooling assembly;
Figure 20 is a perspective view depicting a portion of an implementation of a gearbox fluid manifold assembly included in a cooling assembly;
Figure 21 is a perspective view depicting a portion of an implementation of a gearbox fluid manifold assembly included in a cooling assembly;
Figure 22 is a perspective view depicting a portion of an implementation of a gearbox fluid manifold assembly included in a cooling assembly;
Figure 23 is a perspective view depicting a portion of an implementation of a gearbox fluid manifold assembly included in a cooling assembly;
Figure 24 is a perspective view depicting a portion of an implementation of a gearbox fluid manifold assembly included in a cooling assembly;
Figure 25 is a perspective view depicting a portion of an implementation of a gearbox fluid manifold assembly included in a cooling assembly;
Figure 26 is a perspective view depicting a portion of an implementation of an electric drive system;
Figure 27 is a cross-sectional view depicting a portion of an implementation of an electric drive system;
Figure 28 is a cross-sectional view depicting a portion of an implementation of a gearbox fluid manifold assembly;
Figure 29 is perspective view depicting a portion of an implementation of a gearbox fluid manifold assembly included in a cooling assembly; and
Figure 30 is a cross-sectional view depicting a portion of an implementation of a gearbox fluid manifold assembly included in a cooling assembly.

### DETAILED DESCRIPTION

An electric drive system (EDS) can include a rotating electrical machine, a gearbox coupled to an output of the rotating electrical machine, and power electronics controlling electrical power stored in a vehicle battery supplied to the rotating electrical machine. The EDS can use fluid to cool and/or lubricate its components. For example, the gearbox can use lubricating fluid to both lubricate and cool the geared components included in the gearbox. This fluid can also be supplied to the rotating electrical machine for both lubrication as well as temperature management. The rotating electrical machine can include a stator assembly having stator windings received within radially-inwardly-facing stator slots and a rotor assembly, including an output shaft, received concentrically within the stator assembly. The stator windings can be inserted into the stator slots using any one of a variety of stator winding techniques. Regardless of the chosen winding technique, a portion of the windings extend axially beyond the stator and can be referred to as end turns.

The end turn portion of the stator windings positioned outside of the stator can exist at a temperature that is different from the portion of the stator windings positioned within the stator slots of the stator. In the past, various techniques have been used to increase cooling effect to the end turns, such as spraying fluid over the exposed end turns. It would be helpful to increase the efficiency with which the end turns are cooled as well as the stator itself as part of a fluid circulation circuit that flows fluid through the rotating electrical machine.

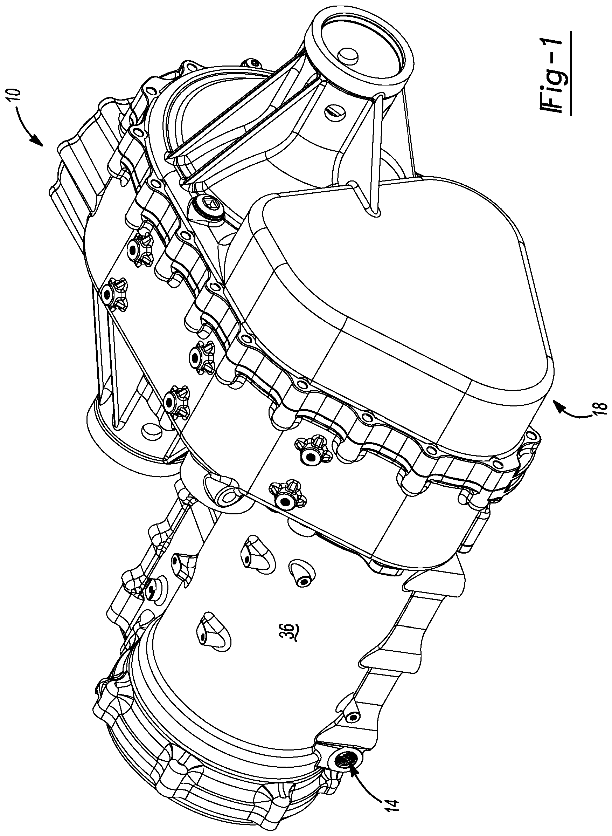

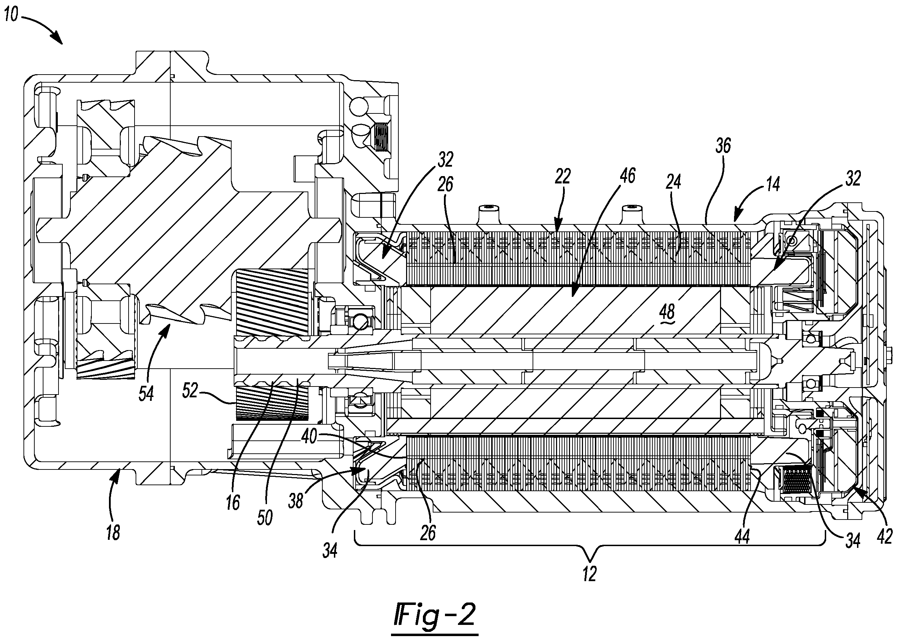

Turning to Figures 1 and 2, an electric drive unit 10 having a cooling assembly 12 can be installed in a battery electric vehicle (BEV; not shown) and include a rotating electrical machine 14 (also sometimes referred to as an electric motor) having an output shaft 16 coupled to a gearbox assembly 18, and power electronics 20 that regulate the supply of electrical power supplied to the rotating electrical machine 14 from a vehicle battery (not shown). The term "BEV" can refer to vehicles that are propelled, either wholly or partially, by electric motors. BEV can refer to electric vehicles, plug-in electric vehicles, hybrid-electric vehicles, and battery-powered vehicles. The rotating electrical machine 14 can include a stator assembly 22 with a stator 24 having axially-extending stator fluid channels 26. The stator 24 may be formed from an axially-extending stack of metal plates that have been joined together to form a unitary structure. Each plate can include apertures that, when aligned with apertures in other plates, can form the stator fluid channels 26. The plates can be bonded together in any one of a number of different ways. The stator 24 includes stator slots 28 that receive stator windings 30. As noted above, the stator windings 30 can be formed in any one of a number of different ways. For example, the stator windings 30 could be cascading, interwoven, or hairpin. A portion of the stator windings 30 existing outside of the stator slot 28 before the stator windings 30 re-enter the slots 28 can be referred to as end turns 32. The end turns 32 in this implementation may be encapsulated in a potting compound 34 so that the end turns 32 are not exposed to the ambient environment inside the electric drive unit 10. The stator 24 can be received within a stator housing 36 that closely conforms to an outer surface of the stator 24. A gearbox fluid manifold assembly 38 can be coupled to a radial face 40 of the stator 24, adjacent the gearbox 18, to receive fluid and direct the fluid closely around the contours of the end turns 32 at the radial face 40. The gearbox fluid manifold assembly 38 can then provide the fluid to the radial face 40 of the stator 24 where the fluid can enter stator fluid channels 26 that extend axially through the stator 24 to an opposite end of the stator 24. An endcap fluid manifold assembly 42 can couple to another radial face 44 of the stator 24 at the opposite end of the stator 24 and direct fluid closely around the end turns 32 at the opposite end.

A rotor assembly 46 can include a rotor 48 and the output shaft 16 coupled to the rotor 48 to prevent the angular displacement of the rotor 48 relative to the shaft 16. The rotor 48 can be configured in different ways depending on the type of rotating electrical machine 14. In one implementation, the rotor 48 can include permanent magnets (not shown) that are circumferentially spaced around the rotor 48. The rotating electrical machine 14 in this implementation can be a permanent magnet synchronous machine. However, other types of rotating machines are possible using the cooling assembly described here. The output shaft 16 can include an end 50 that mechanically couples with the gearbox assembly 18. The gearbox assembly 18 can be implemented in any number of different configurations depending on the needs of the BEV. Here the output shaft 16 can include the end 50 having a spline that engages a helical gear 52. The helical gear 52 can rotatably couple to a differential 54 that transmits rotational movement and torque generated by the output shaft 16 to drive shafts that can be coupled to the drive wheels of the BEV.

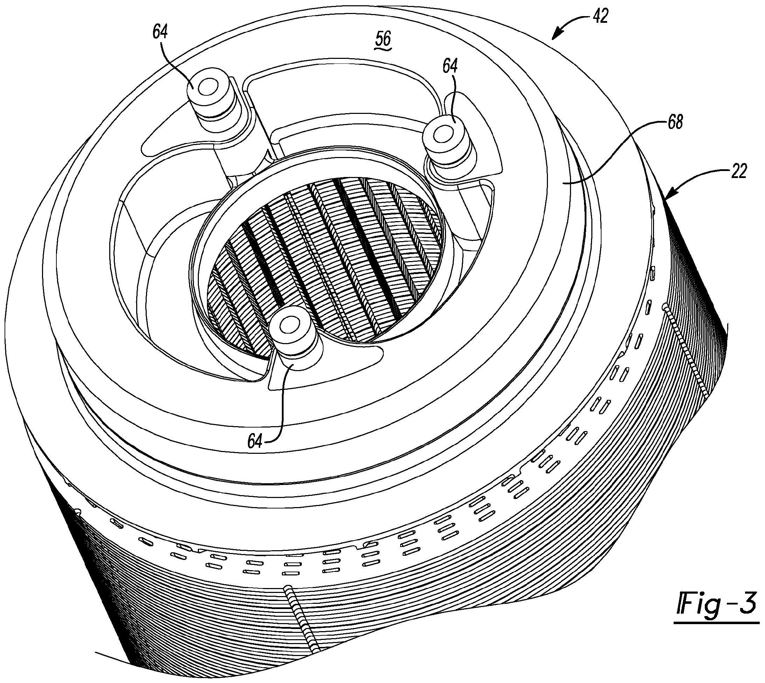

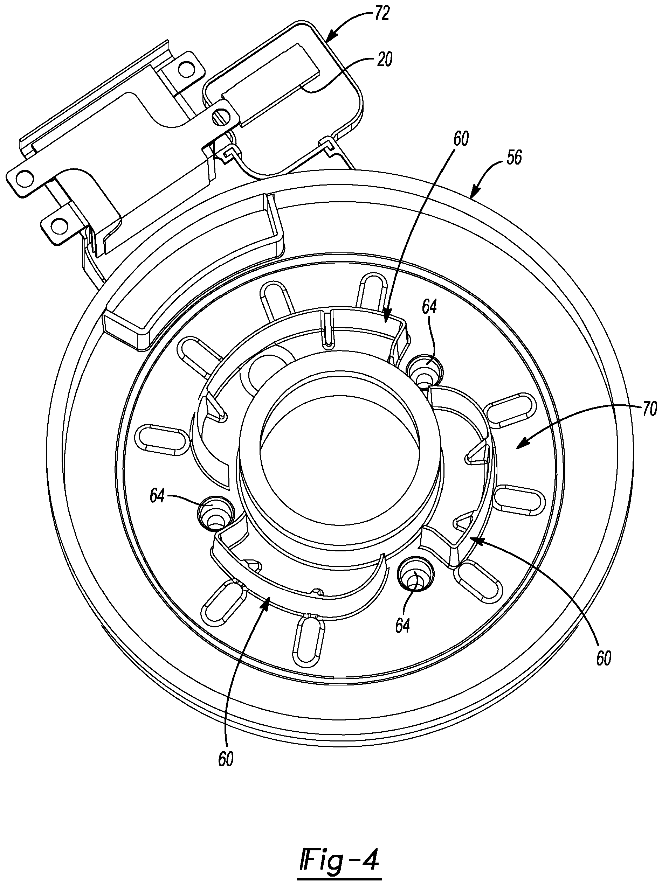

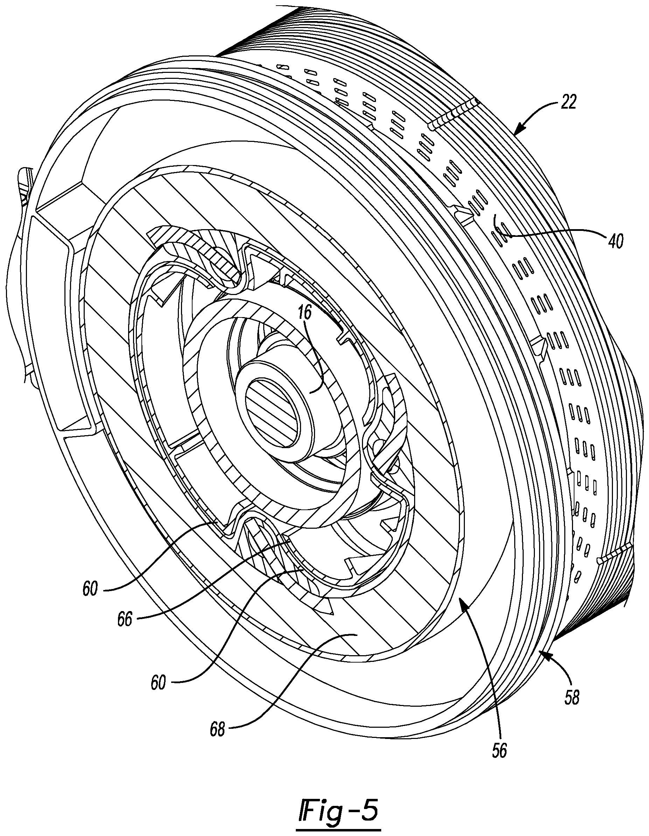

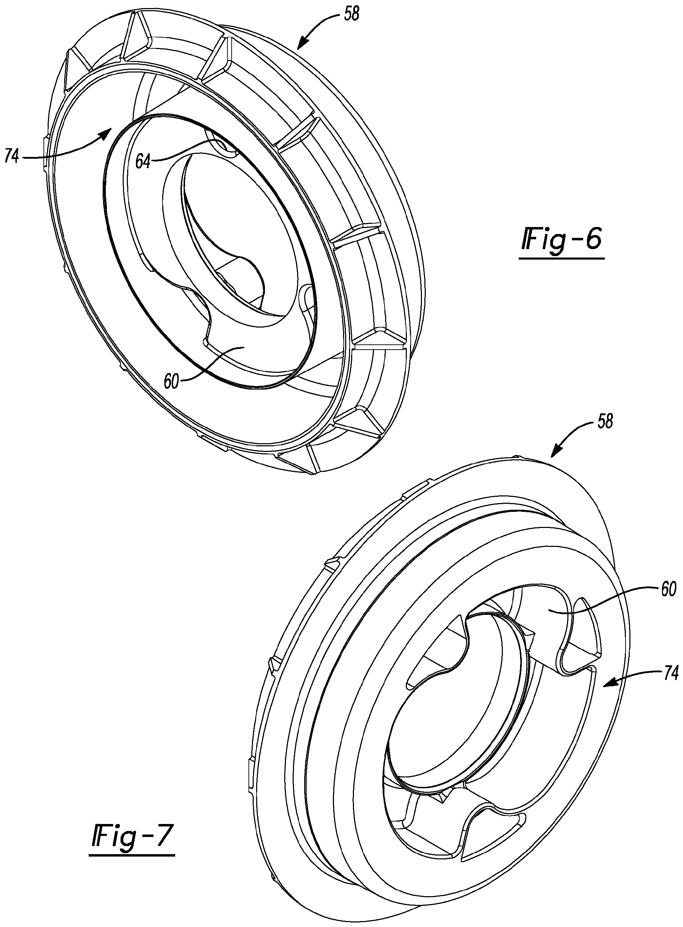

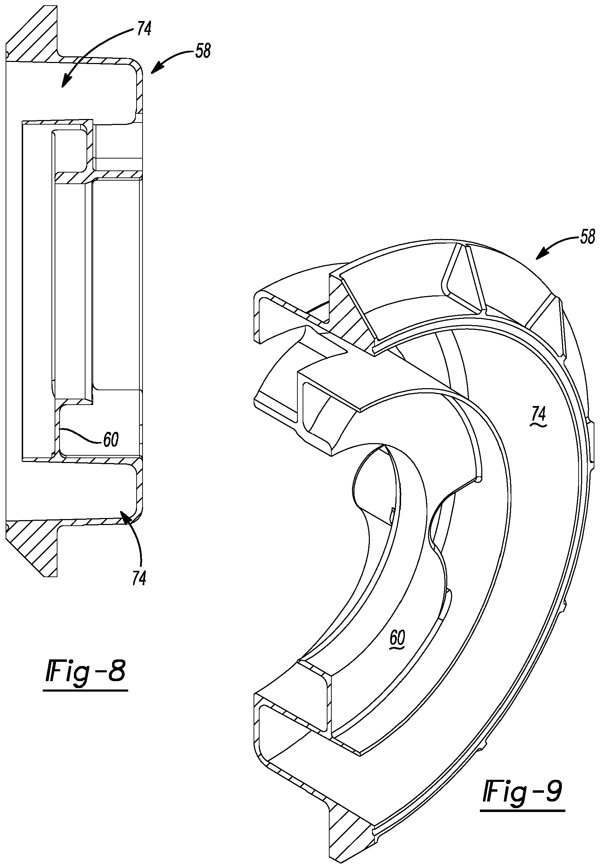

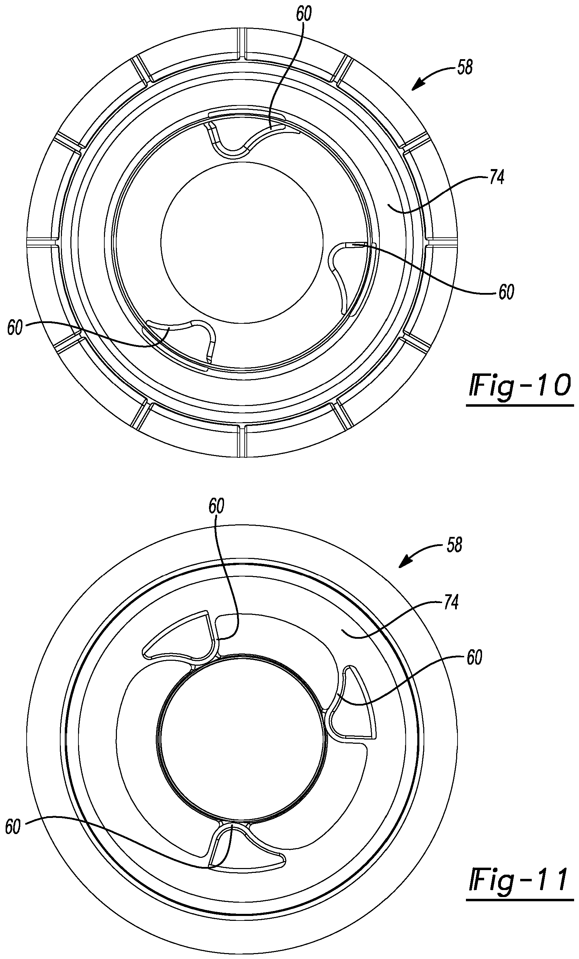

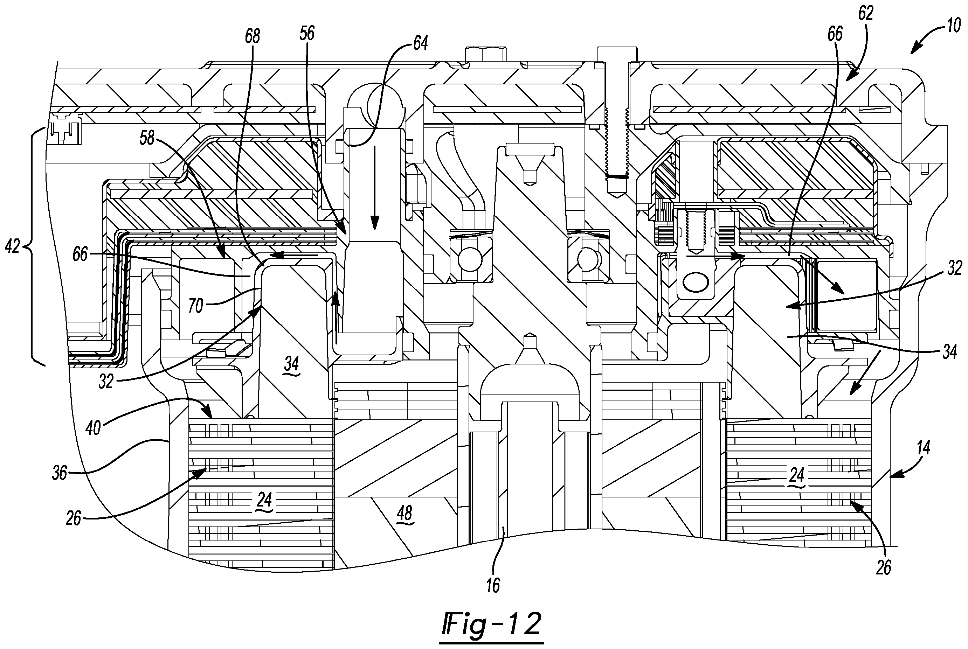

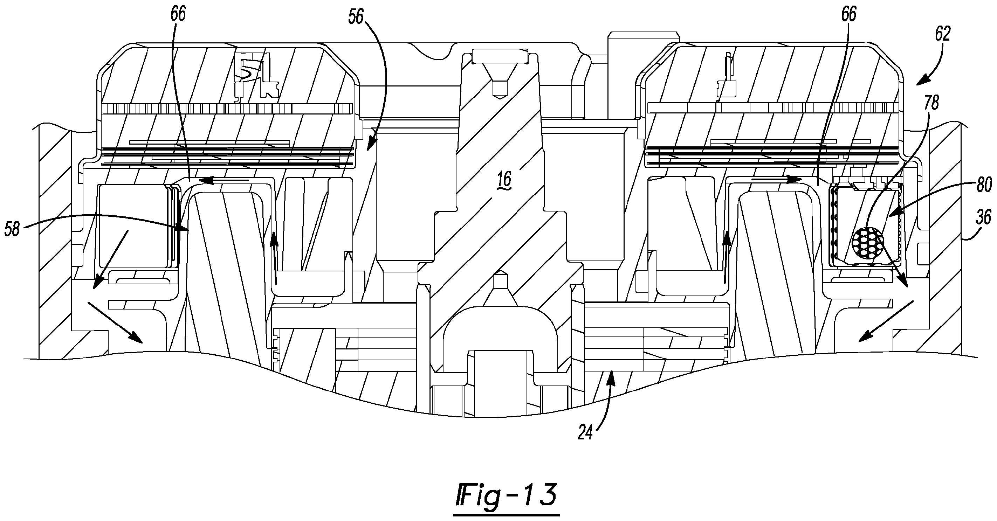

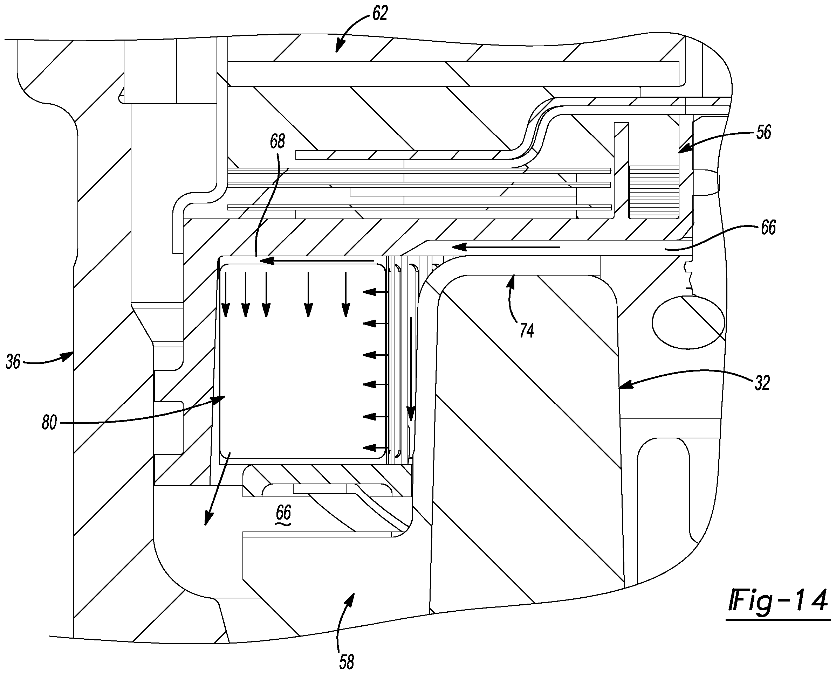

The cooling assembly 12 can include the gearbox fluid manifold assembly 38, the end cap fluid manifold assembly 42, and the stator fluid channels 26. Figures 3-14 depict an implementation of the end cap fluid manifold assembly 42 including an outer plate 56 and an inner plate 58 that are coupled to each other, each including complimentarily-shaped fluid guides 60 that receive fluid from a source, pass the fluid over the end turns 32, and provide the fluid to the stator fluid channels 26. In this implementation, the plates 56, 58 can be substantially planar with an inner diameter shaped and sized to receive the output shaft 16 of the rotating electrical machine 14. An outer diameter of the plates 56, 58 can be sized and shaped to engage with the radial surface 40 of the stator 24 and form a fluid-tight seal. An O-ring can be positioned in between the inner diameter of the plates 56, 58 and the output shaft 16. A plurality of fluid inlets 64 can receive fluid from a fluid source (not shown). In one implementation, the fluid source can be a sump of the gearbox assembly 18 including gear lubricant.

The outer plate 56 and inner plate 58 can each include curved fluid guides 60 extending from one surface of the plate 56, 58. The fluid guides 60 can be surfaces that extend orthogonally from a surface of the plate 56, 58 and may be similarly shaped to form a fluid channel 66 between them. The curved fluid guides 60 can be formed on surfaces of the outer plate 56 and the inner plate 58 that confront each other when the outer plate 56 is joined with the inner plate 58. The confronting relationship can put the curved fluid guides 60 in close proximity to each other leaving a space between the guides 60 that can function as the fluid channel 66. The distance between the fluid guides 60 can be selected based on the desired fluid flow characteristics of the fluid channel 66. It is possible to shape the fluid guides 60 and position them apart from each other such that the velocity at which the fluid flows can be increased. The outer plate 56 can include an annular cap portion 68 that is sized and shaped to receive a correspondingly-shaped portion 70 of the inner plate 58 such that the curved fluid guides 60 are positioned adjacent each other with the defined gap between the guides 60 thereby establishing the fluid channel 66 within the end cap fluid manifold assembly 42. The outer plate 56 can also be integrally formed with a housing 72 and electrical connections for the power electronics 20 used to control the rotating electrical machine 14.

The inner plate 58 can be shaped to closely form around the end turns 32 extending axially from the stator 24. The inner plate 58 can include an end turn receiving portion 74 that is shaped to closely conform to and fit over the end turns 32. The end turn receiving portion 74 can have an outer surface that is adjacent to and in fluid communication with the curved fluid guides 60 on the inner plate 58. The outer surface of the end turn receiving portion 74 can also engage with the outer plate 56 as an attachment point and/or to locate the curved fluid guides radially relative to each other thereby defining the fluid channel 66 within end cap fluid manifold assembly 42. An end cap 62 can couple to the stator housing 36 to encapsulate the assembly 42 within the electric drive unit 10 and form a fluid tight seal against the housing 36.

Fluid can be received from the fluid source and communicated through the fluid channel 66 between the fluid guides 60 of the outer plate 56 and the inner plate 58. In this implementation, a plurality of fluid supply ports 76 can receive fluid from the fluid source and supply the fluid in between the inner plate 58 and the outer plate 56 to the fluid channel 66. The fluid channel 66 can pass the fluid to the end turn receiving portion 74 such that the flow of fluid over the outer surface is in close proximity to the end turns 32. The fluid can exit a fluid outlet port 78 and flow between and outer surface of the stator 24 and a radially-inwardly-facing surface of the stator housing 36. The stator fluid channels 26 can receive the fluid and communicate the fluid toward the gearbox fluid manifold assembly 38.

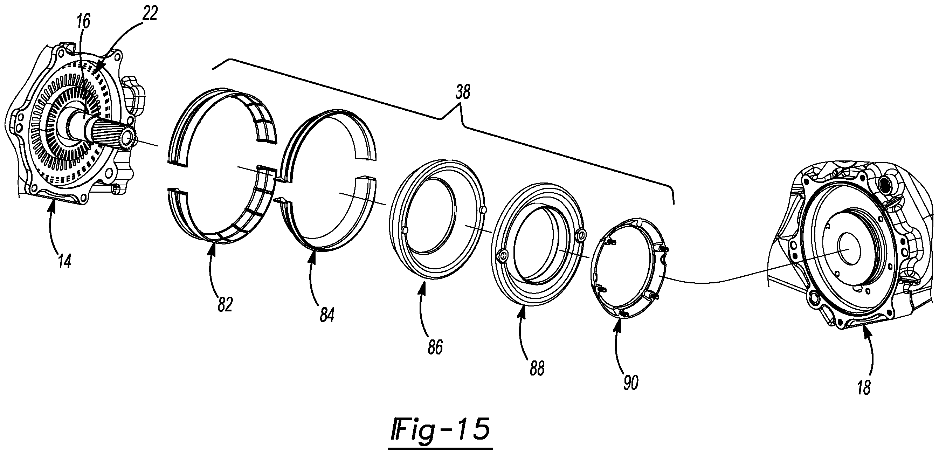

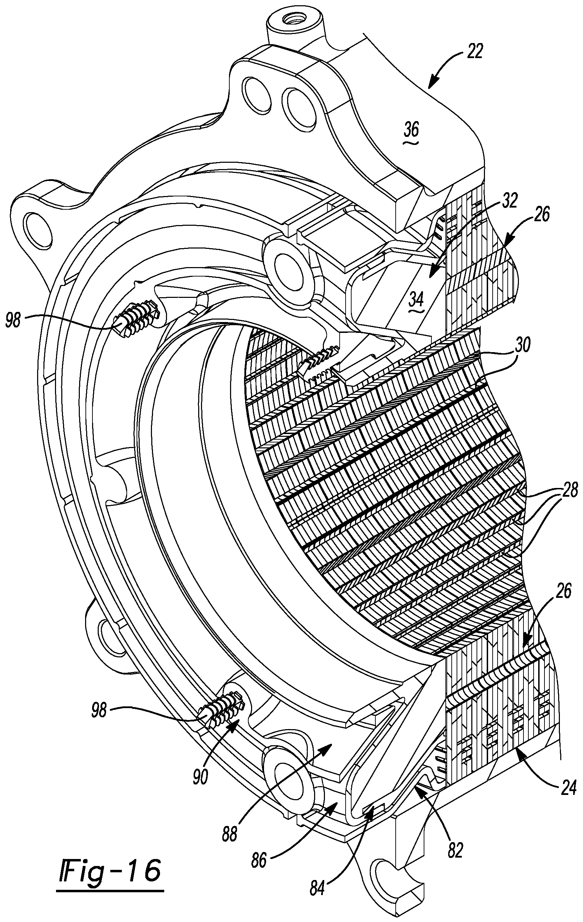

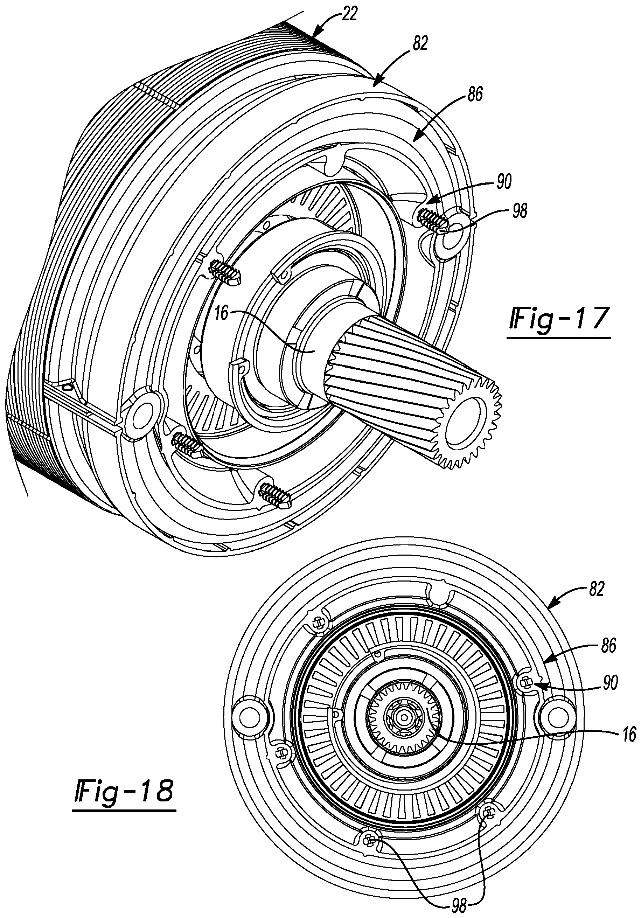

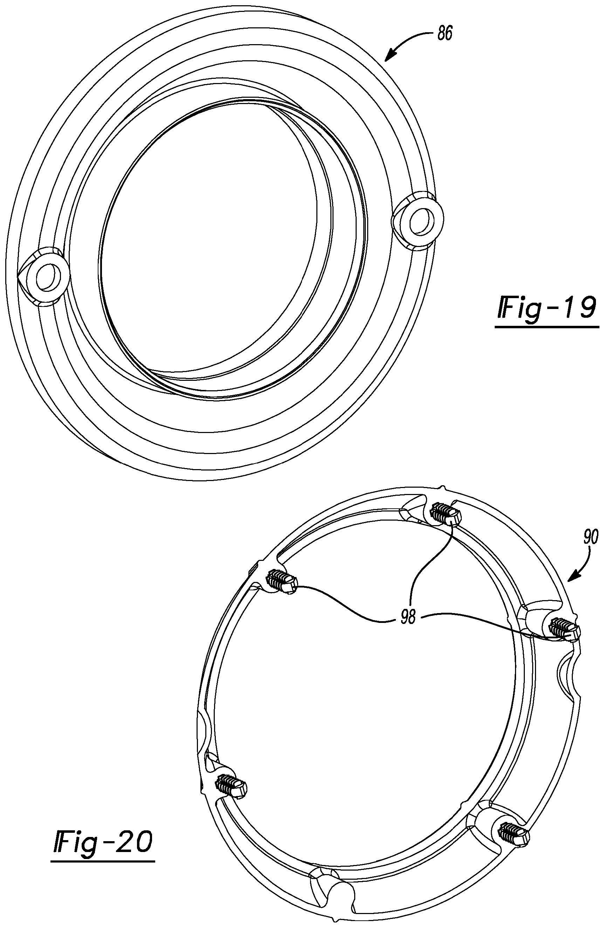

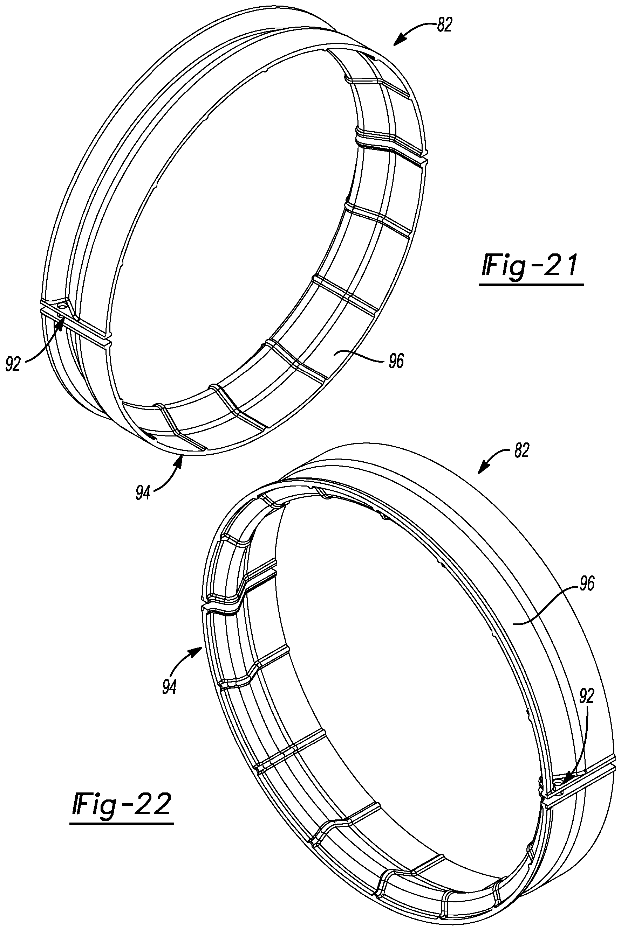

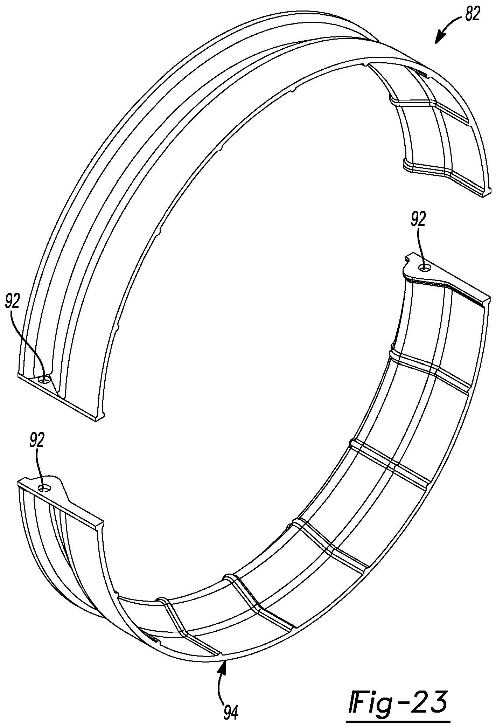

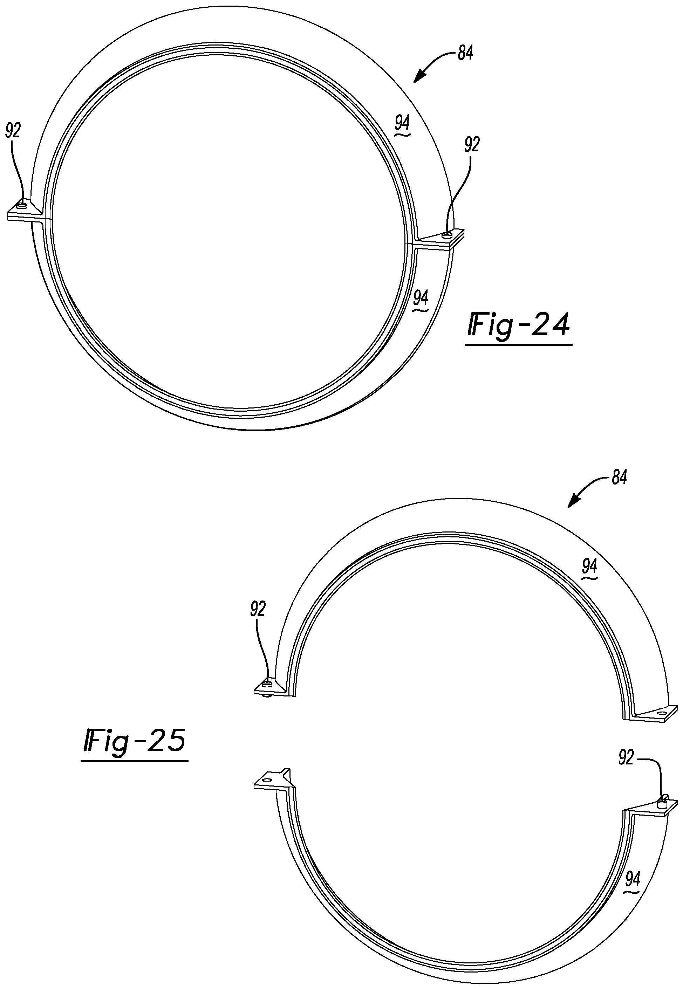

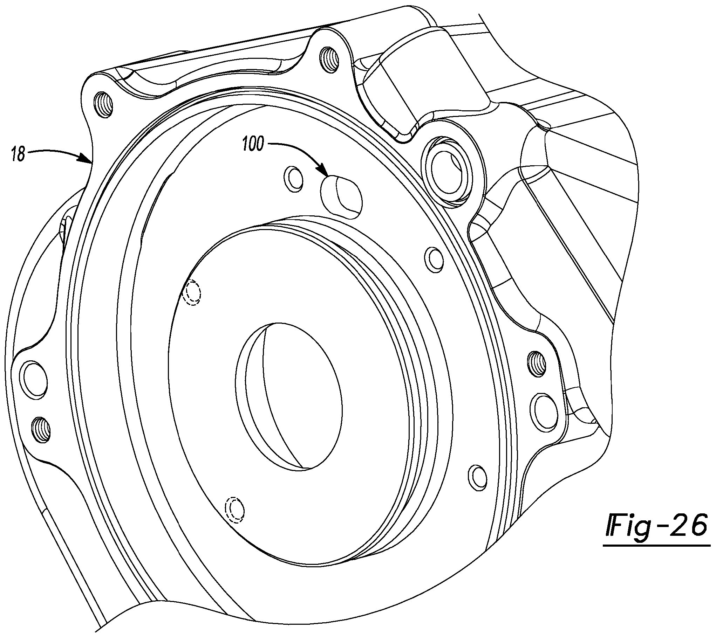

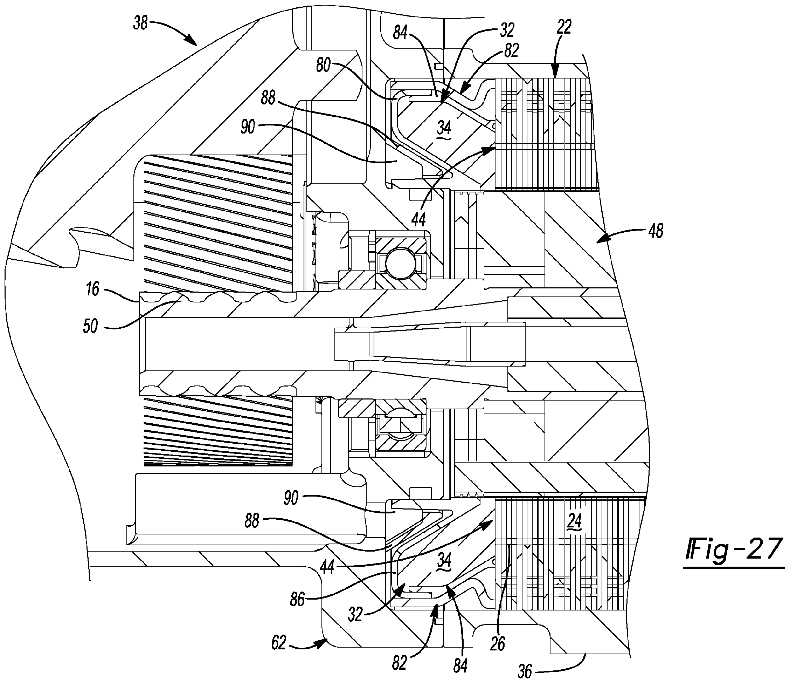

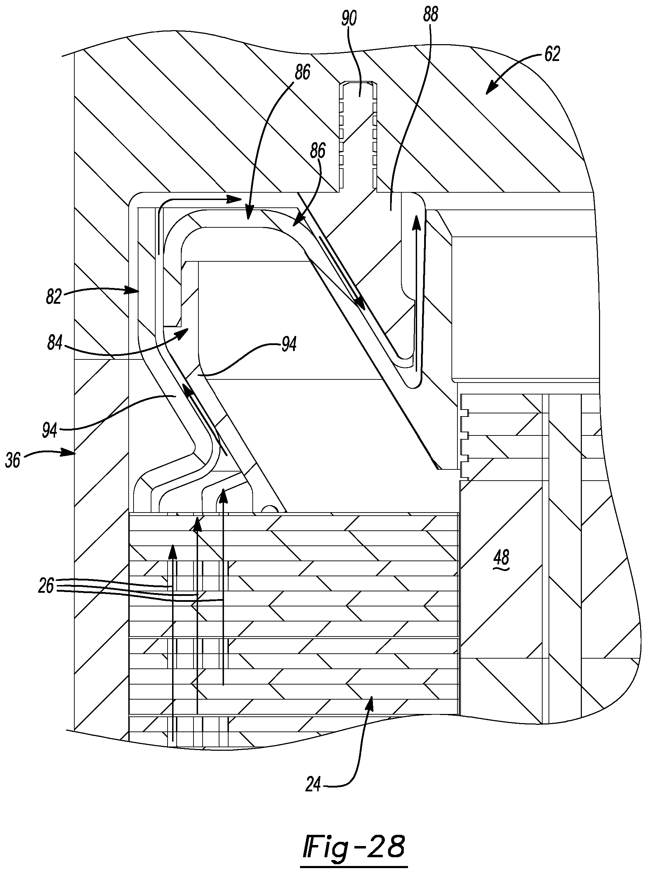

Figures 15-29 depict an implementation of the gearbox fluid manifold assembly 38. The gearbox fluid manifold assembly 38 can be positioned axially in between the gearbox assembly 18 and the stator 24. The gearbox fluid manifold assembly 38 can receive fluid that travels along the stator fluid channels 26 from the end cap fluid manifold assembly 42 and pass the fluid over the end turns 32 near the gearbox fluid manifold assembly 38. The gearbox fluid manifold assembly 38 can flow the received fluid closely around the end turns 32. The gearbox fluid manifold assembly 38 can include an outer segmented guide 82, an inner segmented guide 84, an outer ring 86, an inner ring 88, and a retainer 90. The components of the gearbox fluid manifold assembly 38 can be axially and/or concentrically arranged in close conformity to the shape of the end turns 32 in order to flow fluid in close proximity to or over the end turns 32. In this implementation, the end turns 32 can be shaped so that at least a portion of the end turns 32 can extend in a direction that is non-parallel to an axis of shaft rotation (x). That is, during stator winding, the windings 30 can be positioned in the stator slots 28 such that the end turns 32 extend substantially parallel to the axis of shaft rotation (x). After winding, the end turns 32 can be shaped so that they are articulated at an angle that is non-parallel to the axis of shaft rotation (x). In view of the articulated end turns 32, the outer segmented guide 82 and the inner segmented guide 84 can initially exist in a multipart assembly that are later joined at one or more locations using a fastener 92, as the guides 82, 84 are positioned within the gearbox fluid manifold assembly 38 thereby accommodating the shape of the end turns 32. The outer segmented guide 82 and the inner segmented guide 84 can each include flanges 94 that are angled or raked to a degree that would position the flanges 94 substantially parallel to the end turns 32 and closely conforming to the surface of the end turns 32.

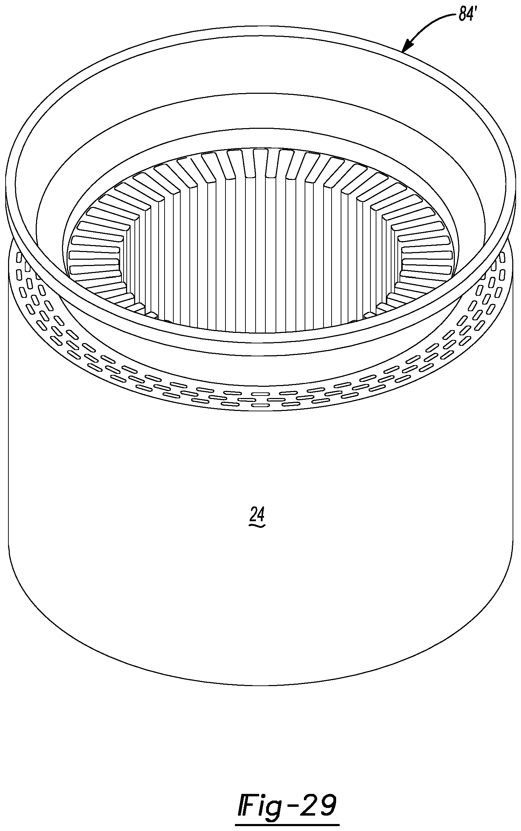

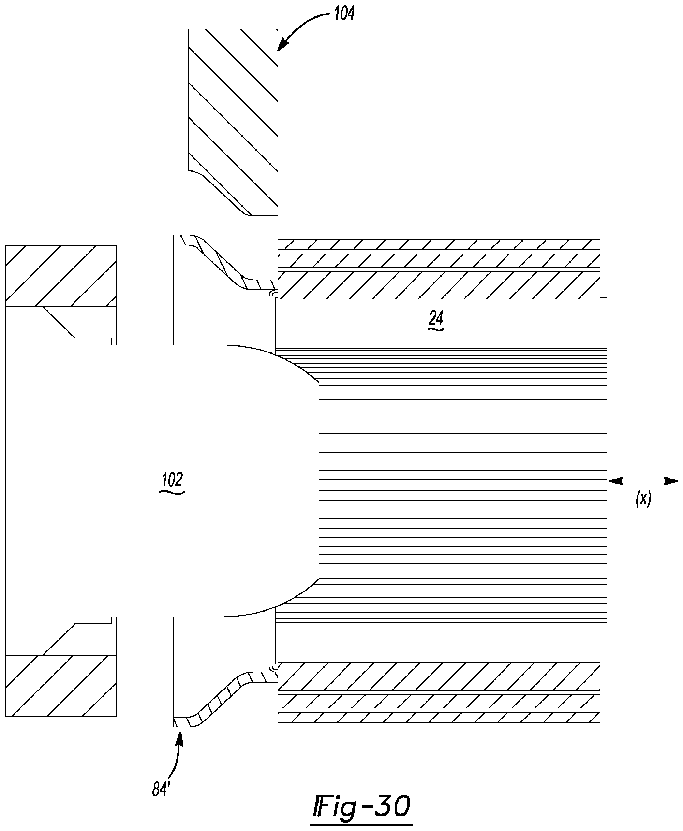

In one implementation, the inner segmented guide 84' could be formed from a single, unitary structure as shown in Figures 29 and 30. In this implementation, the inner segmented guide 84' can initially be formed from an annular length of tubing. The end turns 32 may be positioned within the stator 24 such that they extend away from the radial face 40 of the stator 24 and substantially parallel with the axis of shaft rotation (x), during assembly. A The inner segmented guide 84' can be positioned concentrically relative to the end turns 32. Tooling including a mandrel 102 and a fixture 104 can be used to shape the inner segmented guide 84' such that an end of the guide 84' has a smaller diameter than another end of the guide 84' such that the shape closely conforms to the end turns 32. The mandrel 102 can be a cylindrical post having an outer shape that conforms to the desired shape of the inner segmented guide 84'. The fixture 104 can be a form having a shape that also conforms to the desired shape of the inner segmented guide 84'. The mandrel 102 can be positioned within an inner diameter of the guide 84' and the fixture 104 can be moved radially relative to the axis of shaft rotation (x) toward an outer surface of the guide 84' such that the mandrel 102 and fixture 104 engage the guide 84' and shape it *in situ.* The mandrel 102 and the fixture 104 can then be removed and the inner segmented guide 84' can maintain its shape. After the inner segmented guide 84 has been shaped, the end turns 32 can be mechanically bent or deformed so that they extend in a non-parallel orientation relative to the axis of shaft rotation (x). The new orientation of the end turns 32 can be in close proximity to the inner segmented guide 84'.

The outer ring 86 can engage with the inner segmented guide 84 at a distal end of the end turns 32 to help move fluid around the end turns 32. The outer ring 86 can be formed from a solid, continuous element that caps the end turns 32 and couples with the inner segmented guide 84 to encapsulate the end turns 32. The coupling can be accomplished by snap features in which an aperture receives a stud that holds the elements together. Fluid can flow between the flanges 94 of the outer segmented guide 82 and the inner segmented guide 84 around an outer surface of the outer ring 86. The outer surface of the outer ring 86 can include a shaped outer surface 96 that is non-parallel to the axis of shaft rotation (x) for a length as well as parallel to the axis (x) for a portion. The inner ring 88 can be placed in close proximity to the shaped outer surface 96 of the outer ring 86 and held in place by a plurality of studs 98 extending from the gearbox assembly 18. The gap between the shaped outer surface 96 of the outer ring and a surface of the inner ring 88 confronting the outer ring 86 can direct the fluid to a fluid outlet orifice 100 in the gearbox assembly 18 to direct the fluid to the gears within the assembly 18.

It is to be understood that the foregoing is a description of one or more embodiments of the invention. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms *"e.g.,"* "for example," "for instance," "such as," and "like," and the verbs "comprising," "having," "including," and their other verb forms, when used in conjunction with a listing of one or more components or other items, are each to be construed as openended, meaning that the listing is not to be considered as excluding other, additional components or items. Other terms are to be construed using their broadest reasonable meaning unless they are used in a context that requires a different interpretation.

Various non-limiting examples and embodiments of the foregoing disclosure are described in the following clauses:

### CLAUSES

1. A cooling assembly for an electric drive system in a battery electric vehicle, comprising:
   an end cap fluid manifold assembly, configured to couple to a radial face of a stator of a rotating electrical machine, having:
   an outer plate with an outer plate fluid guide;
   an inner plate with an inner plate fluid guide and an end turn receiving portion that is configured to abut end turns of stator windings in the rotating electrical machine;
   a fluid channel, formed between the outer plate fluid guide and the inner plate fluid guide, configured to receive fluid and communicate the fluid over the end turns.
2. The cooling assembly recited in clause 1, wherein the end cap fluid manifold assembly is positioned adjacent power electronics used to control the rotating electrical machine.
3. The cooling assembly recited in clause 1, wherein the fluid from the fluid channel is communicated to a stator fluid channel in a stator.
4. The cooling assembly recited in clause 1, wherein end cap fluid manifold assembly is positioned concentrically relative to an output shaft of the rotating electrical machine.
5. The cooling assembly recited in clause 1, further comprising baffles positioned within the fluid channel.
6. The cooling assembly recited in clause 1, further comprising a corresponding receiving portion formed in the inner plate that radially locates the outer plate fluid guide relative to the inner plate fluid guide.
7. The cooling assembly recited in clause 1, wherein the end turns are encapsulated in potting compound.
8. A cooling assembly for an electric drive system in a battery electric vehicle, comprising:
   a gearbox fluid manifold assembly, configured to couple to a radial face of a stator of a rotating electrical machine, having:
   an outer segmented guide, including a flange that forms part of a fluid channel, and a plurality of segments that connect at one or more circumferential locations;
   an inner segmented guide, including a flange that forms another part of the fluid channel, and a plurality of segments that connect at one or more circumferential locations, such that the inner segmented guide is configured to abut end turns of the rotating electrical machine;
   an outer ring that couples with the inner segmented guide and also configured to abut the end turns of the rotating electrical machine;
   an inner ring, coupled to the outer ring, forming a portion of the fluid channel; and
   a retainer that axially constrains the inner ring relative to the gearbox fluid manifold assembly.
9. The cooling assembly recited in clause 8, wherein the gearbox fluid manifold assembly is positioned in between a stator of the rotating electrical machine and a gearbox assembly.
10. The cooling assembly recited in clause 8, wherein the fluid from the fluid channel is communicated to the gearbox assembly.
11. The cooling assembly recited in clause 8, wherein the gearbox fluid manifold assembly is positioned concentrically relative to an output shaft of the rotating electrical machine.
12. The cooling assembly recited in clause 8, further comprising baffles positioned within the fluid channel.
13. The cooling assembly recited in clause 8, wherein the end turns are encapsulated in potting compound.
14. The cooling assembly recited in clause 8, wherein the inner segmented guide is a unitary structure and is formed *in situ.*
15. A cooling assembly for an electric drive system in a battery electric vehicle, comprising:
   an end cap fluid manifold assembly, coupled or configured to couple to a radial face of a stator of a rotating electrical machine, having:
      an outer plate with an outer plate fluid guide;
      an inner plate with an inner plate fluid guide and an end turn receiving portion that abuts end turns of stator windings in the rotating electrical machine;
      a fluid channel, formed between the outer plate fluid guide and the inner plate fluid guide, configured to receive fluid and communicate the fluid over the end turns, wherein the fluid channel is in fluid communication with a stator fluid channel in a stator;
   a gearbox fluid manifold assembly, coupled to another radial face of the stator of the rotating electrical machine, having:
      an outer segmented guide, including a flange that forms part of a fluid channel, and a plurality of segments that connect at one or more circumferential locations, wherein the fluid channel receives fluid from the stator fluid channel;
      an inner segmented guide, including a flange that forms another part of the fluid channel, and a plurality of segments that connect at one or more circumferential locations, such that the inner segmented guide abuts end turns of the rotating electrical machine;
      an outer ring that couples with the inner segmented guide and also abuts end turns of the rotating electrical machine;
      an inner ring, coupled to the outer ring, forming a portion of the fluid channel; and
      a retainer that axially constrains the inner ring relative to the end cap fluid manifold assembly.

## Claims

1. A cooling assembly for an electric drive system in a battery electric vehicle, comprising:
an end cap fluid manifold assembly, configured to couple to a radial face of a stator of a rotating electrical machine, having:
an outer plate with an outer plate fluid guide;
an inner plate with an inner plate fluid guide and an end turn receiving portion that is configured to abut end turns of stator windings in the rotating electrical machine;
a fluid channel, formed between the outer plate fluid guide and the inner plate fluid guide, configured to receive fluid and communicate the fluid over the end turns.

2. The cooling assembly recited in claim 1, wherein the end cap fluid manifold assembly is positioned adjacent power electronics used to control the rotating electrical machine.

3. The cooling assembly recited in claim 1, wherein the fluid from the fluid channel is communicated to a stator fluid channel in a stator.

4. The cooling assembly recited in claim 1, wherein end cap fluid manifold assembly is positioned concentrically relative to an output shaft of the rotating electrical machine.

5. The cooling assembly recited in claim 1, further comprising baffles positioned within the fluid channel.

6. The cooling assembly recited in claim 1, further comprising a corresponding receiving portion formed in the inner plate that radially locates the outer plate fluid guide relative to the inner plate fluid guide.

7. The cooling assembly recited in claim 1, wherein the end turns are encapsulated in potting compound.

8. A cooling assembly for an electric drive system in a battery electric vehicle, comprising:
a gearbox fluid manifold assembly, configured to couple to a radial face of a stator of a rotating electrical machine, having:
an outer segmented guide, including a flange that forms part of a fluid channel, and a plurality of segments that connect at one or more circumferential locations;
an inner segmented guide, including a flange that forms another part of the fluid channel, and a plurality of segments that connect at one or more circumferential locations, such that the inner segmented guide is configured to abut end turns of the rotating electrical machine;
an outer ring that couples with the inner segmented guide and also configured to abut the end turns of the rotating electrical machine;
an inner ring, coupled to the outer ring, forming a portion of the fluid channel; and
a retainer that axially constrains the inner ring relative to the gearbox fluid manifold assembly.

9. The cooling assembly recited in claim 8, wherein the gearbox fluid manifold assembly is positioned in between a stator of the rotating electrical machine and a gearbox assembly.

10. The cooling assembly recited in claim 8, wherein the fluid from the fluid channel is communicated to the gearbox assembly.

11. The cooling assembly recited in claim 8, wherein the gearbox fluid manifold assembly is positioned concentrically relative to an output shaft of the rotating electrical machine.

12. The cooling assembly recited in claim 8, further comprising baffles positioned within the fluid channel.

13. The cooling assembly recited in claim 8, wherein the end turns are encapsulated in potting compound.

14. The cooling assembly recited in claim 8, wherein the inner segmented guide is a unitary structure and is formed *in situ.*

15. A cooling assembly for an electric drive system in a battery electric vehicle, comprising:
an end cap fluid manifold assembly according to claim 1 wherein the fluid channel of the end cap fluid manifold assembly is in fluid communication with a stator fluid channel in a stator;
a gearbox manifold assembly according to claim 8 wherein the fluid channel of the gearbox manifold assembly receives fluid from the stator fluid channel.
